(19) Europäisches Patentamt
European Patent Office
Office européen des brevets

(11) **EP 1 271 556 B1**

(12) **EUROPÄISCHE PATENTSCHRIFT**

(45) Veröffentlichungstag und Bekanntmachung des Hinweises auf die Patenterteilung:
**21.09.2011   Patentblatt 2011/38**

(51) Int Cl.:
***G21F 3/00*** *(2006.01)*      ***G01V 5/00*** *(2006.01)*

(21) Anmeldenummer: **02013224.7**

(22) Anmeldetag: **15.06.2002**

(54) **Inspektionsanlage**

Inspection installation

Installation d'inspection

(84) Benannte Vertragsstaaten:
**DE FR GB IT NL**

(30) Priorität: **28.06.2001   DE 10131407**

(43) Veröffentlichungstag der Anmeldung:
**02.01.2003   Patentblatt 2003/01**

(73) Patentinhaber: **Smiths Heimann GmbH**
**65205 Wiesbaden (DE)**

(72) Erfinder: **Dönges, Gerhard**
**65321 Heidenrod (DE)**

(74) Vertreter: **Thul, Hermann**
**Thul Patentanwaltsgesellschaft mbH**
**Rheinmetall Platz 1**
**40476 Düsseldorf (DE)**

(56) Entgegenhaltungen:
**US-A- 4 020 346**

• **PATENT ABSTRACTS OF JAPAN vol. 1999, no. 11, 30. September 1999 (1999-09-30) & JP 11 160487 A (ISHIKAWAJIMA HARIMA HEAVY IND CO LTD), 18. Juni 1999 (1999-06-18)**

**Beschreibung**

Die Erfindung betrifft eine Inspektionsanlage mit einem Strahlentunnel nach dem Oberbegriff des Patentanspruchs 1.

Bekanntlich weisen derartige Inspektionsanlagen insbesondere am Eingang eines Strahlentunnels einen Strahlenschutzvorhang auf, damit, wenn ein Gepäckstück oder eine anderes zu inspizierendes Objekt in die Inspektionsanlage geschleust wird, keine ionisierenden Strahlungen in diesem Bereich austreten können. Jeweils ein Strahlenschutzvorhang ist dazu zumindest am vorderen, häufig aber auch am hinteren Teil eines Strahlentunnels der Inspektionsanlage angebracht. Ein derartiger Strahlenschutzvorhang besteht in der Regel aus mehreren, direkt nebeneinander in einer Reihe angebrachten, herabhängenden dicken Bleilappen.

Bedingt durch die Einführung einer neuen Röntgenschutzverordnung und der damit verbundenen Reduzierung der Strahlengrenzwerte sind in den Inspektionsanlagen zusätzliche Abschirmungsmaßnahmen erforderlich. Die bisher verwendeten Bleilappen bzw. Vorhänge aus bleihaltigem Material behindern schon heute häufig den Durchlauf von Gepäckstücken, bedingt durch den Reibungsangriff in Abhängigkeit des Gewichtes dieser Vorhänge, ganz erheblich. Zusätzliche Abschirmungen zum Einhalten niedriger Grenzwerte bedeuten eine Erhöhung dieses Gewichtes durch einen größeren Bleianteil im Abschirmungsmaterial. Ein höheres Gewicht des Vorhanges bedingt jedoch eine höhere Widerstandskraft des Vorhanges, die negativ auf das Gepäckstück einwirkt.

Aus dem US-Patent 4,020,346 ist eine Inspektionsanlage der gattungsgemäßen Art bekannt, die einen Strahlentunnel, eine Strahlenquelle, eine Detektoranordnung sowie einen Eingang aufweist, der durch zwei hintereinander angeordnete dünne Bleivorhänge abgeschirmt ist. Der Vorhang besteht aus dünnen sich überlappenden Bleilappen mit geringem Reibwert. Hieraus ergibt sich die Aufgabe, eine Strahlenschutzeinrichtung für eine Inspektionsanlage im Bereich des Strahlentunnels zu schaffen, die den neuen verschärften Grenzwerten Rechnung trägt und trotzdem einen ungehinderten Transport durch die Inspektionsanlage gewährleistet.

Gelöst wird diese Aufgabe durch die Merkmale des Anspruchs 1.

Der Erfindung liegt die Idee zugrunde, anstelle eines einzelnen Vorhanges aus flexiblen Bleilappen mit hohem Gewicht, die eine starke Behinderung des Durchlaufs des Gepäckstückes mit sich bringen, mehrere leichte Vorhänge in gewissen Abständen hintereinander anzuordnen, wobei die Reibungskraft geringer ist als bei der Verwendung eines schweren Vorhanges.

Bei Verwendung eines doppelt versetzten Vorhanges wäre keine erhöhte Widerstandskraft gegeben, wenn der Abstand der leichten Vorhänge etwa der Länge des davor befindlichen Vorhanges entspricht. Der minimale Abstand der Vorhänge sollte jedoch eine halbe Länge des vorhergehenden Vorhanges nicht unterschreiten.

In Weiterführung der Erfindung ist es vorteilhaft, die Vorhänge zusätzlich mit einem Material mit besonders geringem Reibwert zu beschichten.

Anhand eines Ausführungsbeispiels mit Zeichnung soll die Erfindung näher erläutert werden. Es zeigt

Fig. 1     eine Strahlenschutzeinrichtung in einer Inspektionsanlage, nach dem Stand der Technik,

Fig. 2     eine Darstellung der auf einen Bleivorhang wirkenden Kräfte,

Fig. 3     eine erfindungsgemäße Strahlenschutzeinrichtung.

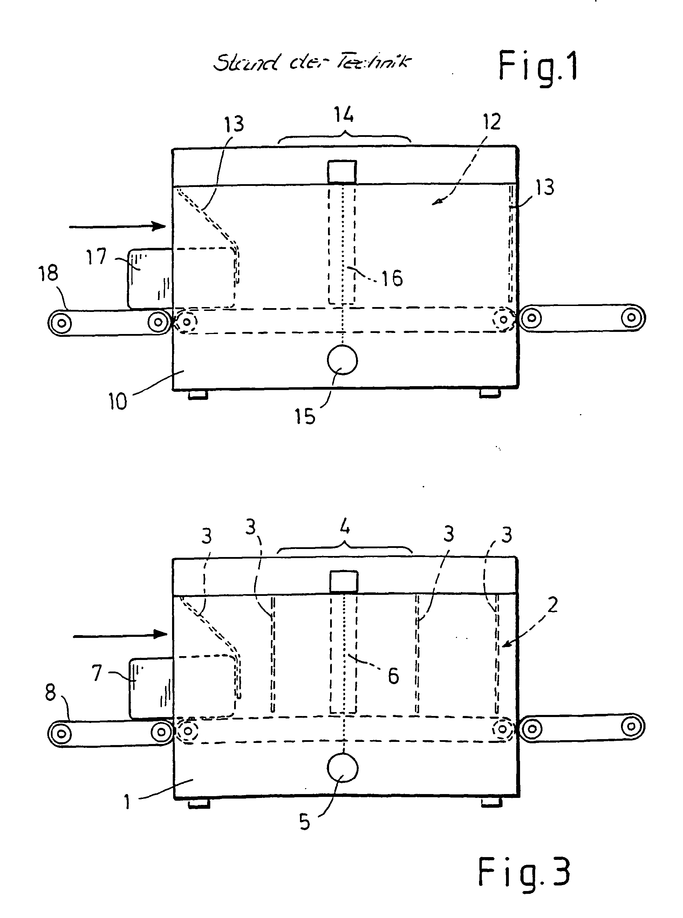

Eine Strahlenschutzeinrichtung nach dem Stand der Technik ist in Fig. 1 dargestellt. Eine Inspektionsanlage 10 weist am Eingang und am Ausgang eines Strahlentunnels 12 jeweils einen Abschirmvorhang 13 auf. Zwischen den beiden Abschirmvorhängen 13 befindet sich ein Strahlungsbereich 14, in dem wenigstens eine Strahlenquelle 15 und wenigstens eine darauf ausgerichtete Detektoranordnung 16 angeordnet sind. Durch den Strahlentunnel 14 führt ein Transportsystem 18, welches in die Inspektionsanlage 10 eingebunden ist. Auf dem Transportsystem 18 liegt ein Gepäckstück 17, welches durch die Inspektionsanlage 10 befördert werden soll. Beim Durchlauf unterliegt dieses Gepäckstück einer Widerstandskraft W des Vorhanges 13.

Diese Widerstandskraft W ist dabei proportional der Spannungskraft S des Vorhanges 13

$$W \sim S \cos \alpha .$$

Die Spannungskraft S bestimmt sich nach folgender Formel

$$S = G \, (1 + e^{\mu\alpha}),$$

wobei
G - das Gewicht des Vorhanges 13 ( im Punkt vereinigt)
$\mu$ - der Reibwert
$\alpha$ - der Umschlingungswinkel sind.

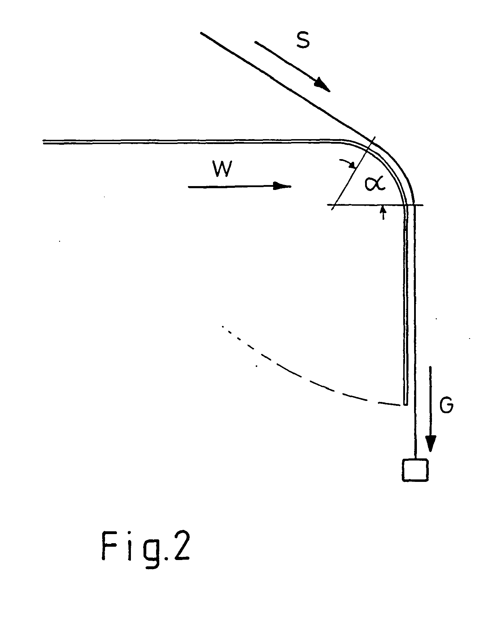

Fig. 2 stellt diesen Zusammenhang zeichnerisch dar.

Mit Reduzierung der Strahlenschutzgrenzwerte und einer damit einhergehenden Erhöhung der Abschirmungswerte für niedrigere Abstrahlwerte müßte nach dem Stand der Technik das Gewicht G des Vorhanges 13 erhöht werden. Würde jedoch das Gewicht G auch nur verdoppelt werden, ergäbe dies eine um den Faktor 7,39 höhere Widerstandskraft W. Diese wiederum würde den Durchlauf des Gepäckstückes 17 stark beeinflussen.

Eine neuartige Strahlenschutzeinrichtung in einer Inspektionsanlage 1 ist in der Fig. 3 dargestellt. Die Strahlenschutzeinrichtung besteht aus mehreren leichten Bleivorhängen 3, hier vier, die hierbei paarweise und im Abstand hintereinander im Strahlentunnel 2 der Inspektionsanlage 1 angeordnet sind. Die beiden vorderen funktional zusammenwirkenden Bleivorhänge 3 sind innerhalb des Strahlentunnels 2 vor einem Strahlungsbereich 4 angebracht, die beiden hinteren funktional zusammenwirkenden Bleivorhänge 3 hinter diesem Strahlungsbereich 4. Im Strahlungsbereich 4 sind wenigstens eine Strahlenquelle 5 und wenigstens eine darauf ausgerichteten Detektoranordnung 6 angeordnet. Zum Transport eines Gepäckstückes 7 in und durch den Strahlentunnel 2 ist in die Inspektionsanlage 1 ein Transportsystem 8 eingebunden, beispielsweise ein Gleitgurtförderer.

Die Bleivorhänge 3 weisen jeweils ein wesentlich geringeres Einzelgewicht G als der Vorhang 13 aus Fig. 1 auf, da sie dünner ausgeführt sind.

Die Dicke d der Bleivorhänge 3, die das Gewicht G mitbestimmt, ist abhängig von der Intensität der Strahlenquelle 5, 15 (Dosierung, Leistung) und den damit verbundenen Abstrahlwerten. Durch Vorgabe der maximal zulässigen Abstrahlwerte wird die notwendige Abschirmung des Strahlentunnels 2, 12 bestimmt. Als eine die Abschirmung beschreibende Zahl gilt der Bleigleichwert. Je höher der Bleigleichwert ist, desto geringer ist die Intensität der austretenden Strahlung.

Bei Verwendung von nur einem Vorhang 13, wie in Fig. 1, verlangt beispielsweise ein Bleigleichwert von 0,35 mm einen ca. 2 mm dicken Vorhang 13.

Bei Verwendung von zwei oder mehreren funktional zusammenwirkenden Bleivorhängen 3, die vor bzw. nach dem Strahlungsbereich 4 angebracht sind, teilt sich diese Dicke d von 2 mm auf die einzelnen Bleivorhänge 3 auf. Sind beispielsweise zwei Bleivorhängen 3 vor bzw. nach dem Strahlungsbereich 4 angeordnet, weist jeder der Bleivorhänge 3 dann nur eine Dicke von 1 mm, bei drei Bleivorhängen 3 jeder nur noch eine Dicke d von 0,66 mm und bei vier Bleivorhängen 4 jeder nur noch eine Dicke d von 0,5 mm auf. Dadurch reduziert sich das Gewicht G der einzelnen Bleivorhänge 3, je mehr in die Inspektionsanlage 1 eingebunden werden. Liegt der Bleigleichwert sogar bei 0,7 mm, kann dieser problemlos durch Einbeziehung weitere Bleivorhänge 3 aufgeteilt werden. Es ist aber auch möglich, im Rahmen der zulässigen Widerstandskraft W, diesen Bleigleichwert durch Bestimmung eines neuen Dickenwertes d für den einzelnen Bleivorhang 3 auf diese aufzuteilen.

Neben der Dicke d beeinflußt auch die Länge L der Bleivorhänge 3 das Gewicht G des einzelnen Bleivorhanges 3. Diese Länge L bestimmt sich in erster Linie durch die Höhe h des Strahlentunnels 2.

In einer besonderen Ausführung kann das Gewicht G des zweiten, dritten, vierten usw. weiteren Bleivorhanges 3 weiter reduziert werden, in dem die zwischen den beiden äußeren befindlichen Bleivorhänge 3 kürzer ausgeführt sind. Wichtig ist, daß diese äußeren, den Eingang bzw. den Ausgang des Strahlentunnels 2 abschirmenden Bleivorhänge 3 bis auf das Transportsystem 8 reichen.

Der Abstand a der im Ausführungsbeispiel paarweise angebrachten Bleivorhänge 3 zueinander beträgt in etwa eine Länge L des jeweils vorderen Bleivorhanges 3. Dabei sollte jedoch bei den dazwischen liegenden Bleivorhängen 3 ein minimaler Abstand $a_{min}$ von ungefähr der halben Länge L nicht unterschritten werden, da dies sonst wieder eine Erhöhung der Widerstandskraft W ergibt, wenn das Gepäckstück 7 mit mehreren Bleivorhängen 3 gleichzeitig in Verbindung kommt.

In einer weiteren Verbesserung ist vorgesehen, die Bleivorhänge 3 mit einem Material mit besonders geringem Reibwert $\mu$ zu beschichten. Diese Materialien können sein.

Der einzelne Bleivorhang 3 kann als Ganzes oder durch sich leicht überlappende Bleilappen ausgebildet sein.

**Patentansprüche**

1. Inspektionsanlage mit einem Strahlentunnel, in dem sich ein Strahlungsbereich befindet, der durch wenigstens eine Strahlenquelle sowie wenigstens einer darauf ausgerichteten Detektoranordnung gebildet wird, sowie wenigstens einen Eingang, der durch eine Strahlenschutzeinrichtung nach außen abgeschirmt ist, die durch wenigstens zwei Vorhänge (3) gebildet wird, die im Abstand hintereinander vor dem Strahlungsbereich (4) im Strahlentunnel (2) angeordnet sind, **dadurch gekennzeichnet, dass** ein minimaler Abstand der Vorhänge (3) eine halbe Länge des davor befindlichen Vorhanges nicht unterschreitet.

2. Inspektionsanlage nach Anspruch 1, **dadurch gekennzeichnet, dass** wenigstens zwei Vorhänge (3) nach dem Strahlungsbereich (4) im Strahlentunnel (2) angeordnet sind.

3. Inspektionsanlage nach Anspruch 1 oder 2, **dadurch gekennzeichnet, dass** der Abstand der Vorhänge (3) zueinander etwa der Länge des davor befindlichen Vorhanges entspricht.

4. Inspektionsanlage nach einem der Ansprüche 1 bis 3, **dadurch gekennzeichnet, dass** die Vorhänge (3), die sich zwischen dem am Eingang und dem Strahlungsbereich (4) sowie zwischen dem Strahlungsbereich (4) und einem Ausgang des Strahlentunnels (2) befindlichen Vorhang (3) befinden, kürzer als diese äußeren Vorhänge (3) ausgeführt sind.

5. Inspektionsanlage nach einem der Ansprüche 1 bis 4, **dadurch gekennzeichnet, dass** die Vorhänge (3) dünne, sich überlappende Bleilappen sind.

**6.** Inspektionsanlage nach einem der Ansprüche 1 bis 4, **dadurch gekennzeichnet, dass** die Vorhänge (3) dünne, glanzstückige Bleivorhänge sind.

## Claims

**1.** Inspection system having a beam tunnel in which there is located a radiation area which is formed by at least one beam source and at least one detector arrangement aligned therewith, and at least one entrance, which is screened off from outside by a beam shielding device which is formed by at least two curtains (3) which are arranged at a spacing one behind another upstream of the radiation area (4) in the beam tunnel (2), **characterized in that** a minimum spacing of the curtains (3) does not fall below a half length of the curtain located upstream thereof.

**2.** Inspection system according to Claim 1, **characterized in that** at least two curtains (3) are arranged downstream of the radiation area (4) in the beam tunnel (2).

**3.** Inspection system according to Claim 1 or 2, **characterized in that** the spacing of the curtains (3) from one another corresponds approximately to the length of the curtain located upstream thereof.

**4.** Inspection system according to one of Claims 1 to 3, **characterized in that** the curtains (3) which are located between the curtain (3) located at the entrance and the radiation area (4), as well as between the radiation area (4) and an exit of the radiation tunnel (2), are designed to be shorter than these outer curtains (3).

**5.** Inspection system according to one of Claims 1 to 4, **characterized in that** the curtains (3) are thin overlapping lead cloths.

**6.** Inspection system according to one of Claims 1 to 4, **characterized in that** the curtains (3) are thin whole-piece lead curtains.

## Revendications

**1.** Installation d'inspection comportant un tunnel de rayonnement, dans lequel se trouve une zone de rayonnement, qui est formée par au moins une source de rayonnement ainsi qu'au moins un agencement de détecteur aligné sur celle-ci, ainsi qu'au moins une entrée, qui est blindée par rapport à l'extérieur par un dispositif de protection du rayonnement, qui est formé par au moins deux écrans suspendus (3), qui sont disposés en étant espacés l'un derrière l'autre avant la zone de rayonnement (4) dans le tunnel de rayonnement (2), **caractérisée en ce qu'**un espacement minimal des écrans suspendus (3) ne dépasse pas une demi-longueur de l'écran suspendu précédent.

**2.** Installation d'inspection selon la revendication 1, **caractérisée en ce qu'**au moins deux écrans suspendus (3) sont disposés après la zone de rayonnement (4) dans le tunnel de rayonnement (2).

**3.** Installation d'inspection selon la revendication 1 ou 2, **caractérisée en ce que** l'espacement des écrans suspendus (3) les uns par rapport aux autres correspond approximativement à la longueur de l'écran suspendu précédent.

**4.** Installation d'inspection selon une des revendications 1 à 3, **caractérisée en ce que** les écrans suspendus (3), qui se trouvent entre l'écran suspendu (3) se trouvant sur l'entrée et la zone de rayonnement (4) ainsi qu'entre la zone de rayonnement (4) et une sortie du tunnel de rayonnement (2), sont réalisés de manière à être plus courts que les écrans suspendus (3) extérieurs.

**5.** Installation d'inspection selon une des revendications 1 à 4, **caractérisée en ce que** les écrans suspendus (3) sont des bavettes de plomb fines se chevauchant.

**6.** Installation d'inspection selon une des revendications 1 à 4, **caractérisée en ce que** les écrans suspendus (3) sont des écrans suspendus de plomb fins entiers.

EP 1 271 556 B1

Stand der Technik    Fig.1

Fig.3

5

S

W

α

G

# Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4020346 A